# EUROPEAN PATENT APPLICATION

(11) **EP 1 865 019 A1**
(43) Date of publication of application: **12.12.2007**
(21) Application number: 07009422.2
(22) Date of filing: 10.05.2007
(51) Int. Cl.: C08J 5/12, C09J 7/00, D03D 15/00

(54) **Thermoadhesive tape**

(30) Priority: 09.06.2006 IT MI20061119
(71) Applicant: Brambilla, Andrea, 20019 Concorezzo MI (IT)
(72) Inventor: Brambilla, Andrea, 20019 Concorezzo MI (IT)
(74) Representative: Ferrari, Barbara

(57) **Abstract**

The present invention concerns a thermoadhesive tape (1) which comprises weft (2; 20a; 20b; 102) and warp (3), at least one between said weft (2; 20a; 20b; 102) and warp (3) comprising at least one filament of thermoadhesive fibre (4; 40; 101).

## Description

### Field of application

The present invention refers to a thermoadhesive tape particularly but not exclusively intended for use in the field of textiles, of footwear and in the field of clothing.

### Prior art

The technique of manufacturing clothing (and similar) without stitching according to which the join between different components or parts of the garment is obtained using a thermoadhesive tape has been known for some time.

Tapes of this type essentially consist of a sheet of fusible plastic material, for example polyurethane, applied onto a textile support optionally with a layer of adhesive in between.

Tapes of the aforementioned type are also known in which the fusible plastic material is present in points on a woven or non-woven support.

The melting of the plastic material, in the tape arranged between the components to be joined, is generally obtained through heat and by applying a pressure on the components intended to be joined.

Although achieving the purpose, tapes of the aforementioned type are not without drawbacks, including mainly a relatively high modulus of elasticity given by the use of polyurethane or polyurethane resins, which can also cause an unpleasant sensation in contact with the skin of the user.

In addition, the manufacture of these tapes is rather expensive, in particular because the thermoplastic materials currently used have rather high costs.

The technical problem underlying the present invention is that of providing a thermoadhesive tape, particularly but not exclusively intended for use in the field of textiles and footwear, having structural and functional characteristics such as to overcome the aforementioned drawbacks.

### Summary of the invention

The aforementioned problem is solved, according to the invention, by a thermoadhesive tape comprising warp and weft characterized in that at least one between said warp and weft comprises at least one filament of thermoadhesive fibre.

According to a first embodiment of the invention the aforementioned filament of thermoadhesive fibre is a filament of warp and preferably it is a filament of warp positioned near a longitudinal edge of the tape.

The filament of thermoadhesive fibre can be a full stroke filament of warp or a partial stroke filament of warp.

Consequently, the tape according to the invention can comprise the aforementioned filament of thermoadhesive fibre on both faces, or else selectively on just one face.

Preferably, the aforementioned filament of thermoadhesive fibre is a filament of grilon® or another fibre consisting of mixtures of polyamides or another thermoadhesive plastic material.

In any case, the preferred melting temperature value of the filament of thermoadhesive fibre is between 40 and 150°C, or better between 60 and 135°C.

According to a second embodiment of the invention, the present tape comprises filaments of thermoadhesive fibre that melt at different temperatures.

Thus, for example, the tape can comprise a first filament consisting of a first thermoadhesive fibre, which advantageously softens at about 60°C and through which the tape is so to speak removably fixed or "spot- welded" onto the fabric of a garment, and a second filament consisting of a second thermoadhesive fibre that melts for example around 120°C, and with which two different parts of the garment are joined together, when the tape is put into use.

Again advantageously, the tape according to the invention can comprise filaments of microfibre and/or elastomer, which contribute to determining a predetermined desired elasticity of the tape.

In accordance with a further embodiment of the invention, the present tape is characterised in that it comprises a first weft and a second weft, a first warp and a second warp respectively associated with said first and second weft and a warp common to both of said wefts, wherein at least one between said first warp and said second warp comprises said at least one filament of thermoadhesive fibre..

In accordance with yet another further embodiment of the tape according to the present invention, the at least one filament of thermoadhesive fibre is a filament of weft, woven into the thermoadhesive tape, replacing or in addition to the aforementioned at least one filament of warp of thermoadhesive fibre, also in a so-called crocheting of the tape itself.

In this last case of crocheting of the tape according to the invention, the at least one filament of thermoadhesive fibre is a filament of weft preferably woven in addition to filaments of weft of another fibre.

In accordance with a further embodiment of the invention, the present tape is characterized in that said warp and said weft are entirely made of filaments of thermoadhesive fibre, i.e. the warp and the weft comprise only filaments of thermoadhesive fibre of the above described type, which are woven or knitted together.

In this last embodiment of the invention the thermoadhesive tape is a so- called hundred per cent melting tape, that is, according to the invention and as previously described, a woven manufactured tape that also can be of the crocheted type. Further characteristics and advantages of the thermoadhesive tape according to the present invention shall become clearer from the following detailed description of some preferred embodiments thereof, with reference to the attached drawings for indicating and not limiting purposes.

### Brief description of the drawings

In such drawings:
Figure 1 is an enlarged schematic longitudinal section view of a portion of a thermoadhesive tape in accordance with the present invention;
Figure 2 is a schematic perspective view of the portion of tape of figure 1;
Figure 3 is an enlarged schematic longitudinal section view of a portion of the thermoadhesive tape in accordance with an alternative embodiment of the present invention.
Figure 4 is a schematic perspective view of a face (reverse face) of the portion of tape of figure 3.
Figure 5 is a schematic perspective view of the other face (front face) of the portion of tape of figure 3.
Figure 6 is an enlarged schematic plan view of a portion of the thermoadhesive tape in accordance with a further alternative embodiment of the invention.

### Detailed description

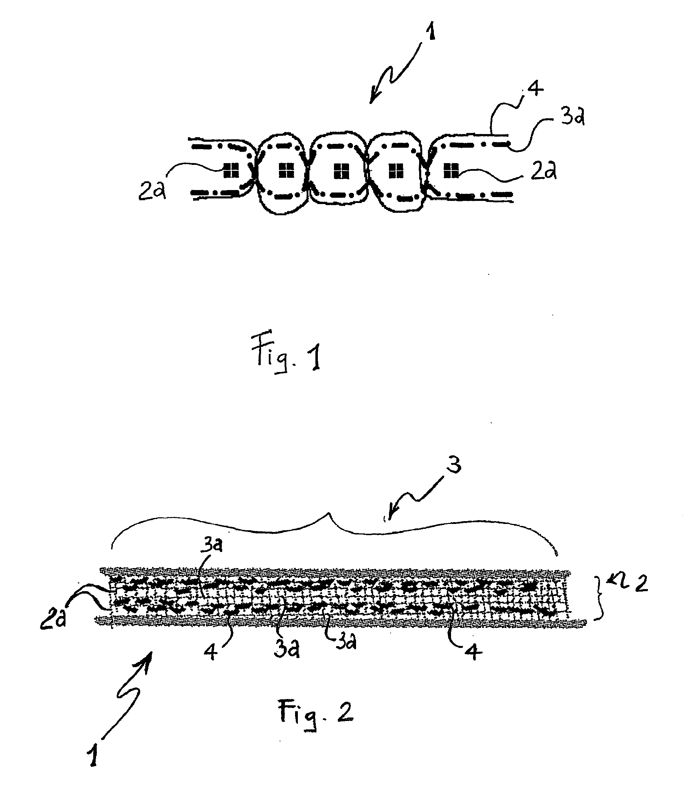

With reference to figures 1 and 2, a thermoadhesive tape in accordance with the present invention is globally and schematically represented with 1.

The thermoadhesive tape 1 is a so-called woven tape, and comprises weft 2 and warp 3 respectively made from weft filaments 2a and warp filaments 3a, woven together in a *per* se known way. Obviously, such weft 2 and warp 3 can be also knitted or in a general way meshed with each other.

In accordance with a first aspect of the invention, in the thermoadhesive tape 1, hereafter also indicated simply as tape 1, at least one between the warp and the weft comprises at least one filament of thermoadhesive fibre 4, i.e. such at least one filament of thermoadhesive fibre 4 is part of the weft and/or the warp, and it is woven with, the aforementioned filaments of weft 2a and/or warp 3a.

In particular, as shown in the example of figure 2, the tape 1 comprises filaments of thermoadhesive fibre 4 woven as filaments of warp, preferably extending at the longitudinal edges of the tape 1.

With reference to figure 1, it should however be noted that the filaments of thermoadhesive fibre 4 are filaments of warp with full stroke in the tape 1.

In other words, such filaments of thermoadhesive fibre 4 are woven along the entire cross section or thickness of the tape 1 making, together with the aforementioned warp filaments 3a, two essentially identical faces in the tape 1, both having filaments of thermoadhesive fibre 4.

In a preferred embodiment of the tape 1, the filaments of thermoadhesive fibre 4 are woven so as to have the greatest excursion of the remaining warp filaments 3a. In this way, portions of the filaments of thermoadhesive fibre 4 project with respect to a plane of said tape 1, defined by the normal filaments of weft 2a and warp 3a.

Preferably, the filaments of thermoadhesive fibre 4 are filaments of grilon® or another fibre consisting of mixtures of polyamides or similar thermoadhesive and/or thermoplastic materials having a melting temperature of between 40 and 150°C, preferably between 60 and 135°C, i.e. compatible with the thermal stability of the main fibres generally used in weaving and manufacturing processes of garments and clothing accessories.

In accordance with the invention, the tape 1 can also comprise different filaments of thermoadhesive fibre, for example first warp filaments 4 of thermoadhesive fibre and second weft filaments of thermoadhesive fibre, not represented in the figures, which melt and/or soften at different temperatures.

It is also possible to consider second warp filaments of thermoadhesive fibre.

As regards the remaining filaments of weft 2a and of warp 3a of the present tape, it should be stated that they can be filaments of elastomeric fibre and/or of microfibre.

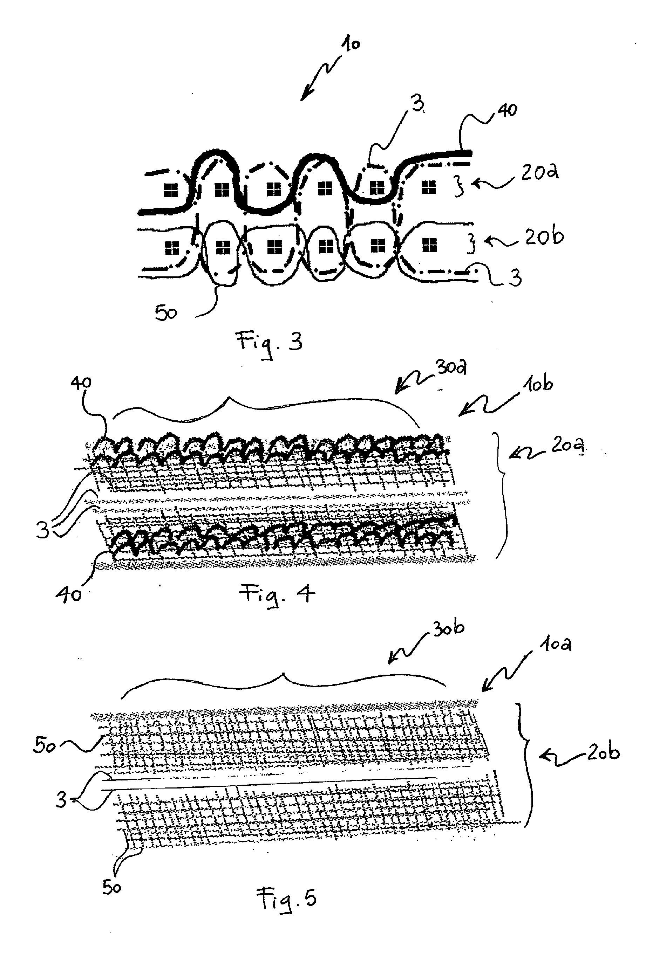

For particular types of use, the present invention provides a thermoadhesive tape comprising two different faces, which will be described here with reference to figures 3, 4 and 5, in which the parts structurally and functionally the same as those of the tape 1 keep the same reference numerals.

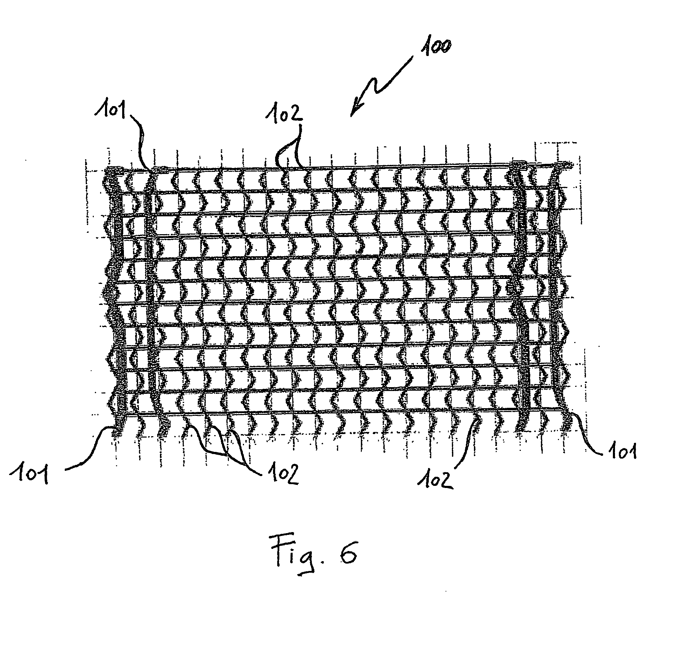

In detail, in figures 5 and 4 a first face of a tape 10, or front face 10a, without filaments of thermoadhesive fibre, and a second face, or reverse face 10b, in which warp filaments 40 of thermoadhesive fibre woven at longitudinal end portions of the tape 10, are respectively shown.

To make such two different faces 10a and 10b, the tape 10 comprises the aforementioned filaments of thermoadhesive fibre 40 woven as filaments of warp with partial stroke.

In other words, the filaments of thermoadhesive fibre 40 only partially cross the transversal thickness of the tape 10, for example on one face up to a middle portion of the tape itself.

With regard to this, the tape 10 comprises a first weft 20a and a second weft 20b, a first warp 30a and a second warp 30b respectively associated with the aforementioned first and second weft 20a and 20b and a warp 3 common to both of the wefts 20a ad 20b.

In accordance with the invention, at least one between the aforementioned first and second warp 30a and 30b comprises the at least one filament of thermoadhesive fibre 40.

In particular, the common warp 3 is a warp with full stroke whereas the aforementioned first and second warp 30a and 30b are respectively a top centre warp consisting of the filaments of thermoadhesive fibre 40 and a bottom centre warp consisting of normal warp filaments, or preferably filaments of microfibre 50, as is shown in the example of figure 3.

As can be seen from the figures, the top centre warp 30a, together with the first weft 20a associated with it and the warp with full stroke 3, makes the aforementioned reverse face 10b of the tape 10 comprising the filaments of thermoadhesive fibre 40.

Similarly, the bottom centre warp 30b, together with the second weft 20b associated with it and also the warp with full stroke 3, makes the aforementioned front face 10a of the tape 10, essentially without filaments of thermoadhesive fibre.

As described previously and in accordance with an alternative embodiment of the invention, the present tape can comprise weft filaments of thermoadhesive fibre woven in it together with warp filaments of thermoadhesive fibre, or only weft filaments of thermoadhesive fibre in place of the thermoadhesive fibre woven into the tape as warp.

In particular, this last embodiment of the thermoadhesive tape according to the invention is represented in figure 6 where a crocheted tape 100 comprises weft filaments of thermoadhesive fibre, advantageously made of grilon®, indicated with 101.

Such weft filaments of thermoadhesive fibre 101 are woven into the tape 100 in addition to weft filaments 102 of different fibre, for example an elastomer fibre such as lycra.

In other words, in the above-described embodiments of the invention, the thermoadhesive tape comprises weft (2; 20a; 20b; 102) and warp (3) as well as at least one filament of thermoadhesive fibre (4; 40; 101) woven with said weft (2; 20a; 20b; 102) and warp (3).

In accordance with a further embodiment of the invention, the tape is a so-called hundred per cent melting tape, that is, the tape comprises only filaments of thermoadhesive fibre, this embodiment not being represented in the figures.

In this case, the warp and the weft of the tape are entirely made of filaments of thermoadhesive fibre of the above-described type, which are woven together.

Also in this case the tape can comprise different filaments of thermoadhesive fibre that melt and/or soften at different temperatures.

Obviously, all the embodiments previously described, such as tapes comprising a plurality of warps and/or wefts, can be also realised as being entirely made of filaments of thermoadhesive fibre.

Filaments woven together or woven tape means, in the present case as well as in the embodiments above described, that the tape according to the invention is manufactured by weaving or by knitting filaments (yarns). Therefore, the tape can be of the crocheted type, or it can also be a warp and weft weave mesh or net tape, with continuous or discontinuous weft.

The tape according to the invention is manufactured using filaments having a diameter preferably of between 50 and 600 ditex, which are, for instance, worked in a cold-weaving process.

Moreover, the thermoadhesive tape of the present invention has a width preferably of between 3 and 70 mm and a thickness of between 0,2 and 4 mm.

In use, the tape according to the present invention is for instance used to join portions of garments or clothing accessories, e.g. in the manufacture of fabric items without stitching; alternatively, the tape is used as a sealing tape for the filling of sewing holes.

Moreover, tape according to the invention is advantageously used as a waterproof barrier, in particular the 100% melting type.

The Applicant, in fact, has carried out preliminary experimentation that has confirmed the outstanding effectiveness of the 100% melting tape as a waterproof barrier. In particular, the tape has been tested in the manufacturing of a shoe in which the tape is used as a sealing tape for the filling of sewing holes. The tape has showed a sealing waterproof ability, also after the shoe has been dipped into water for fifty days.

However, it can be contemplated to use the tape according to the present invention in relation to any combination of components intended to be associated in the partial or complete manufacture of a garment or clothing accessory, footwear, as well as an accessory or a furnishing accessory like for example a cushion or a sofa covered with fabric.

It is also possible to use the tape according to the invention as finishing of semi-finished fabric products, applying it to edges of such semi-finished products.

With regard to the thermoadhesion of the filaments of thermoadhesive fibre, i.e. their melting with relative adhesion to a fabric, it should be stated that it can occur through heat or else through ultrasound, both by contact ad by induction.

The main advantage of the tape according to the invention lies in the high versatility of use that it displays, which is mainly due to the fact that the tape has an entirely woven structure.

In such a woven structure, both the filaments of thermoadhesive fibre before they melt and the adhesive plastic material obtained following melting of the filaments, constitute a single body with any possible remaining filaments present in the tape.

It is also possible, by making a suitable selection of the filaments of thermoadhesive fibre of the tape according to the invention, to obtain a tape capable of joining only temporarily to a fabric or garment through simple softening and/or only partial melting of such filaments of thermoadhesive fibre. In this case it is possible to once again separate the tape from the fabric or garment by applying a suitable tugging force, without damaging the fabric or garment itself.

In any case, the tape according to the invention, has displayed a resistance to wear comparable with that of fabrics, as well as a lower modulus of elasticity than that of thermoadhesive tapes provided by the prior art and high softness to touch, in this way being long-lasting and able to offer substantial comfort to the user.

The present tape has also proven to be easier to dye and have a lower cost compared to known thermoadhesive tapes as well as a good workability being suitable for use in both inside and outside applications in garments, and more generally in fabrics, and also being decorative and capable of conferring the garment manufactured with it a pleasant appearance.

In other words, the tape according to the present invention enables the manufacturing of, for example but not only, footwear, garments and clothing accessories exhibiting excellent characteristics of fit and comfort.

Furthermore, it should be stated that thanks to the entirely woven structure, the tape according to the invention is, so to speak, a "ready-to-use" tape and therefore particularly simple to apply and use. Moreover, it can be contemplated to have predetermined mechanical properties, which can advantageously be modified according to needs by variation of the woven fibres, and possibly of the type of weave in any case always ensuring optimal pliability, meaning by this the elastic characteristic of the tape, for the type of use for which it is intended.

## Claims

1. Thermoadhesive tape (1; 10; 100) comprising weft (2; 20a; 20b; 102) and warp (3) **characterised in that** at least one between said weft (2; 20a; 20b; 102) and warp (3) comprises at least one filament of thermoadhesive fibre (4; 40; 101).

2. Thermoadhesive tape (1; 10; 100) according to claim 1, **characterised in that** said thermoadhesive fibre is grilon® or another fibre consisting of mixtures of polyamides.

3. Thermoadhesive tape (1; 10) according to claim 1 or 2, **characterised in that** said at least one filament of thermoadhesive fibre (4; 40) is a warp filament.

4. Thermoadhesive tape (1; 10) according to any one of the previous claims, **characterised in that** said at least one filament of thermoadhesive fibre (4; 40) is positioned near a longitudinal edge of said tape (1; 10).

5. Thermoadhesive tape (1) according to any one of the previous claims, **characterised in that** said at least one filament of thermoadhesive fibre (4) is a warp filament with full stroke.

6. Thermoadhesive tape (1) according to any one of the previous claims, **characterised in that** said at least one filament of thermoadhesive fibre (4) makes two essentially identical faces on said tape (1).

7. Thermoadhesive tape (10) according to any one of claims 1 to 4, **characterised in that** said at least one filament of thermoadhesive fibre (40) makes a reverse face (10b) including said at least one filament of thermoadhesive fibre (40) and a front face (10a) without said at least one filament of thermoadhesive fibre (40) on said tape (10).

8. Thermoadhesive tape (10) according to any one of claims 1-4 or 7, **characterised in that** said weft comprises a first weft (20a) and a second weft (20b) and said warp comprises a first warp (30a) and a second warp (30b) respectively associated with said first and second weft (20a, 20b) and a warp (3) common to both of said wefts (20a, 20b), wherein at lest one between said first and second warp (30a, 30b) comprises said at least one filament of thermoadhesive fibre (40).

9. Thermoadhesive tape (100) according to claim 1 or 2, **characterised in that** said filament of thermoadhesive fibre (101) is a weft filament.

10. Thermoadhesive tape (100) according to any one of claims 1, 2 or 9, **characterised in that** it is a crocheted tape.

11. Thermoadhesive tape according to any one of the previous claims, **characterised in that** it comprises at least two different filaments of thermoadhesive fibre, said filaments of thermoadhesive fibre melting at different temperatures.

12. Thermoadhesive tape (1; 10; 100) according to any one of the previous claims, **characterised in that** said weft (2; 20a; 20b; 102) and warp (3) comprise filaments of microfibre and/or elastomer, in addition to said at least one filament of thermoadhesive fibre.

13. Thermoadhesive tape (1; 10; 100) according to any one of the previous claims, **characterised in that** said at least one filament of thermoadhesive fibre (4; 40; 101) has a melting temperature of between 40 and 150°C, preferably between 60 and 135°C.

14. Thermoadhesive tape according to claim 1, 2, 11 or 13, **characterised in that** said warp and said weft are entirely made of filaments of thermoadhesive fibre.

15. Thermoadhesive tape according to claim 14 in which said filaments of thermoadhesive fibre are woven or knitted making a warp and weft weave mesh or net tape with continuous or discontinuous weft or a crocheted type tape.

16. Use of a thermoadhesive woven tape according to any one of the previous claims, as a sealing tape for the filling of sewing holes and/or as a waterproof barrier.
